(19) Europäisches Patentamt
European Patent Office
Office européen des brevets

(11) **EP 3 236 624 B1**

(12) **EUROPEAN PATENT SPECIFICATION**

(45) Date of publication and mention
of the grant of the patent:
**31.07.2019 Bulletin 2019/31**

(21) Application number: **15869265.7**

(22) Date of filing: **11.12.2015**

(51) Int Cl.:
*H04L 12/803* (2013.01)    *H04L 12/931* (2013.01)

(86) International application number:
**PCT/CN2015/097152**

(87) International publication number:
**WO 2016/095758 (23.06.2016 Gazette 2016/25)**

(54) **CROSS-BOARD FORWARDING METHOD AND APPARATUS**

VERFAHREN UND VORRICHTUNG ZUR PLATTENÜBERGREIFENDEN WEITERLEITUNG

APPAREIL ET PROCÉDÉ D'ACHEMINEMENT INTER-TABLEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2014 CN 201410797626**

(43) Date of publication of application:
**25.10.2017 Bulletin 2017/43**

(73) Proprietor: **ZTE Corporation
Shenzhen, Guangdong 518057 (CN)**

(72) Inventor: **CHEN, Shimeng
Shenzhen
Guangdong 518057 (CN)**

(74) Representative: **Studio Torta S.p.A.
Via Viotti, 9
10121 Torino (IT)**

(56) References cited:
**EP-A1- 2 081 398        CN-A- 1 859 175
CN-A- 101 267 435       CN-A- 102 118 305
US-A1- 2004 002 237     US-A1- 2006 056 412
US-A1- 2011 222 394     US-A1- 2013 182 581
US-A1- 2014 198 656**

## Description

## TECHNICAL FIELD

The present invention relates to but is not limited to the field of data communication.

## BACKGROUND

Cross-board forwarding is a common forwarding behavior in the communication field. For example, for a switch or router device having multi-service cards, data traffic enters from a service card 1 and goes out from a service card 2, and this process is referred to as cross-board forwarding. The cross-board forwarding traffic further needs to pass through a switching board card, that is, the data traffic enters from an ingress of the service card 1 and then exits from a cross-board egress of the service card 1. The cross-board egress of the service card 1 is connected to the switching board card, thus the traffic may enter the switching board card, then the switching board card forwards the traffic to the service card 2, and finally, the traffic is forwarded from the egress of the service card 2, which constitutes a whole cross-board forwarding process.

For the cross-board forwarding traffic, a communication device in a network needs to uniformly share the ingress traffic to the cross-board egress of this service card. In this way, the maximum utilization rate of the cross-board egress of the service card can be achieved, and the cross-board forwarding capability of the communication device can be improved. The traffic entering from the service card is irregular, it is difficult to, using a common hash manner, share the ingress traffic to the cross-board egress of the service card evenly. In other words, some cross-board egress traffic is large, some cross-board egress traffic is small, and even some egress traffic exceeds a maximum bandwidth of a single cross-board egress port. Therefore, a packet loss may be caused, meanwhile the utilization rate of the cross-board egress is reduced, and thus the cross-board forwarding capability of the whole device is reduced. This section provides background information related to the present invention which is not necessarily prior art.

US 2014198656 provides a switch including a plurality of ports, a link management module, a forwarding module, and a link adaptation module. The link adaptation module detects an imbalance of the respective link utilizations among links of the link aggregation based on one or more imbalance criteria, and applies one or more corrective actions to the distribution policy. US 2013/182581 proposes that multicast traffic is simultaneously routed via all switches participating in the trunk (can be referred to as partner switches). A respective partner switch synchronizes the local multicast state information with all other partner switches.

US 2011/222394 provides a method of forwarding traffic through a network node including an ingress IO card, an egress IO card, and a pair of parallel switch fabric cards. Under a normal operating condition of the node, the ingress IO card forwards the committed information rate (CIR) traffic component through the working switch fabric card, and forwards the extra information rate (EIR) traffic component through the protection switch fabric card. Upon detection of a failure impacting the working switch fabric card, the ingress IO card drops the EIR traffic component and forwards the CIR traffic component through the protection switch fabric card.

US 2006/056412 provides a routing device including a routing table for storing a plurality of routes in a multiway trie in a first memory for caching a first set of the plurality of trie nodes and a second memory for caching a second set of the plurality of trie nodes; and a route manager adapted to relocate one or more nodes of the second set from the second memory to the first memory such that the a utilization count for each of the nodes of the first memory is higher than each of the nodes of the second memory.

## SUMMARY

The present invention provides a cross-board forwarding method and apparatus according to the appended claims, to solve the problem that in the related technologies, balanced forwarding is unavailable in case of large traffic or in case that the traffic is irregular. Embodiments are defined by the dependent claims.

In particular, a cross-board forwarding method is provided, which includes:

> distributing traffic of an ingress port of an ingress service board card evenly to all cross-board egress ports of the ingress service board card; and
> forwarding traffic of the cross-board egress ports of the ingress service board card through a switching board card and an egress service board card in turn.

Optionally, in the above method, the forwarding the traffic of the cross-board egress ports of the ingress service board card through a switching board card and an egress service board card in turn includes:

> transmitting the traffic of each cross-board egress port of the ingress service board card to each ingress port of the switching board card, respectively;
> forwarding the traffic of each ingress port of the switching board card to the egress service board card through a corresponding egress port of the switching board card, respectively; and
> forwarding, by the egress service board card, the traffic forwarded by the switching board card according to forwarding information of the traffic;
> wherein the ingress port of the switching board card corresponds, one to one, to the egress port of the switching board card.

Optionally, in the above method, the distributing traffic of an ingress port of an ingress service board card evenly to all cross-board egress ports of the ingress service board card includes:

collecting statistics on a number X of the ingress ports of the ingress service board card and a number Y of the cross-board egress ports of the ingress service board card, and dividing the X ingress ports evenly into Y groups; and
distributing traffic of each group of ingress ports as divided to each cross-board egress port of the ingress service board card, respectively.

Optionally, in the above method, the dividing the X ingress ports evenly into Y groups includes:

determining a number Z of ports included in each group when dividing the X ingress ports evenly into Y groups, wherein Z=X/Y, and Z is an integer; and
dividing every Z ports in the X ports into one group.

Optionally, in the above method, the dividing every Z ports in the X ports into one group includes:

dividing every Z adjacent ports into one group according to a port sequence number; or
dividing Z designated ports into one group according to a configuration instruction.

A cross-board forwarding apparatus is provided, which includes:

an ingress service board card traffic control element, configured to distribute traffic of an ingress port of an ingress service board card evenly to all cross-board egress ports of the ingress service board card; and
a forwarding traffic control element, configured to forward the traffic of the cross-board egress ports of the ingress service board card through a switching board card and an egress service board card in turn.

Optionally, in the above apparatus, the forwarding traffic control element includes:

a switching board card traffic control module, configured to transmit the traffic of each cross-board egress port of the ingress service board card to each ingress port of the switching board card, respectively, and forward the traffic of each ingress port of the switching board card to the egress service board card via a corresponding egress port of the switching board card, respectively, wherein the ingress port of the switching board card corresponds, one to one, to the egress port of the switching board card; and
an egress service board card traffic control module, configured to forward the traffic forwarded by the switching board card according to forwarding information of the traffic.

Optionally, in the above apparatus, the ingress service board card traffic control element includes:

a dividing module, configured to collect statistics on a number X of the ingress ports of the ingress service board card and a number Y of the cross-board egress ports of the ingress service board card, and divide the X ingress ports evenly into Y groups; and
a traffic control module, configured to distribute traffic of each group of ingress ports as divided respectively to each cross-board egress port of the ingress service board card.

Optionally, in the above apparatus, the dividing module is configured to:
determine a number Z of ports included in each group when dividing the X ingress ports evenly into Y groups, wherein Z=X/Y, and Z is an integer.
Optionally, in the above apparatus, the dividing module is configured to:

divide every Z adjacent ports into one group according to a port sequence number; or
divide Z designated ports into one group according to a configuration instruction.

A computer readable storage medium is provided, which stores computer-executable instructions, wherein the computer-executable instructions are executed to implement any one of the above methods.
Compared with related technologies, in the technical solution of the present invention, no any special requirement is imposed on the magnitude of the traffic or the rule of the traffic.
Other aspects may be apparent after reading and understanding the accompany drawings and detailed description.
This section provides a summary of various implementations or examples of the technology described in the invention, and is not a comprehensive invention of the full scope or all features of the disclosed technology.

**BRIEF DESCRIPTION OF THE DRAWINGS**

The drawings are described herein to provide a further understanding of the invention, which form a part of this application. The exemplary embodiments of the invention and the description thereof are intended to be illustrative of the invention and do not constitute an improper limitation of the invention. In the drawings:

FIG. 1 is a flowchart of a cross-board forwarding method according to an embodiment of the present invention;
FIG. 2 is a schematic diagram of cross-board forwarding traffic of a communication device according to this embodiment;

FIG. 3 is a flowchart of cross-board forwarding traffic of the communication device according to this embodiment; and

FIG. 4 is a schematic diagram of a cross-board forwarding apparatus according to an embodiment of the present invention.

## DETAILED DESCRIPTION

The following will make a detailed description of the embodiments of the present invention with reference to the accompanying drawings. It should be noted that the embodiments in the present invention and the features in the embodiments may be combined with each other on a non-conflict basis.

Embodiment 1

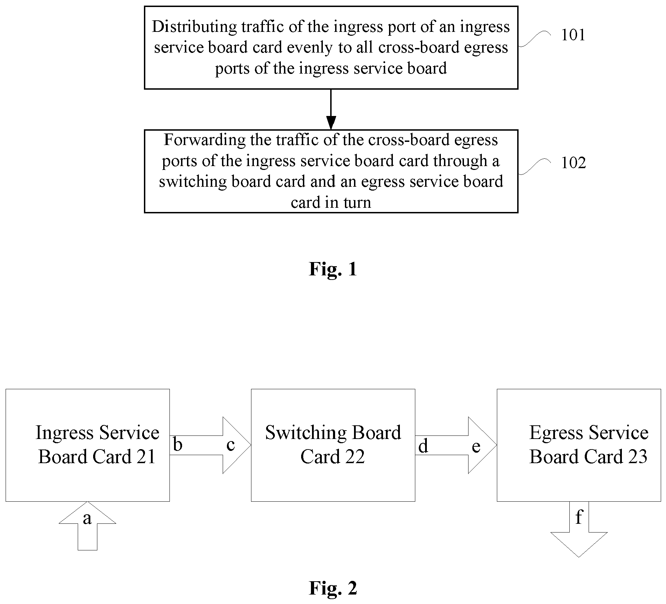

It is pointed out that an incoming traffic service board may divide traffic by means of an ingress port, and evenly distribute the traffic to a cross-board egress port of an ingress service board card. On a switching board, it is ensured that the traffic is evenly distributed according to a one-to-one corresponding ingress-egress relationship, so that it is ensured that the cross-board egress traffic reaches a load equalization, and no packet loss occurs during traffic cross-board forwarding, so that maximum utilization of the cross-board egress bandwidth is achieved. In this way, the cross-board forwarding capacity of the whole device is enhanced. As shown in FIG. 1, this embodiment provides a method for cross-board forwarding of load equalization based on an ingress port, which substantially includes the following operation steps:

in Step 101, the traffic of the ingress port of the ingress service board card is evenly distributed to all cross-board egress ports of the ingress service board card; and
in Step 102, the traffic of the cross-board egress ports of the ingress service board card is forwarded through a switching board card and an egress service board card in turn.

Optionally, when the traffic of the cross-board egress ports of the ingress service board card is forwarded through the switching board card in turn, the traffic of each cross-board egress port of the ingress service board card may be respectively transmitted to each ingress port of the switching board card.

Next, the traffic of each ingress port of the switching board card is respectively forwarded to the egress service board card by means of the corresponding egress port of the switching board card.

Finally, the egress service board card forwards, according to forwarding information of the traffic, the traffic forwarded by the switching board card.

The ingress port of the switching board card corresponds, one to one, to the egress port of the switching board card to ensure that the traffic of the switching board card is also evenly forwarded.

The process of evenly distributing the traffic of the ingress port of the ingress service board card to all cross-board egress ports of the ingress service board card includes:

collecting statistics on the number X of the ingress ports of the ingress service board card and the number Y of the cross-board egress ports of the ingress service board card, and evenly dividing the X ingress ports into Y groups; and
respectively distributing traffic of each group of ingress ports divided to each cross-board egress port of the ingress service board card.

When evenly dividing the X ingress ports into Y groups, it is needed to first determine the number Z of ports included in each group, and then every Z ports among the X ports are divided into one group. $Z=X/Y$, and the Z is an integer.

In the process of dividing every Z ports into one group, every Z adjacent ports may be divided into one group according to a port sequence number; or Z designated ports may be divided into one group according to a configuration directive as long as it is ensured that the ingress ports are evenly divided.

In the following, the above method is further described in detail by reference to the accompanying drawings and embodiments.

First, definitions of some port names are introduced with reference to FIG. 2.

An ingress port a of an ingress traffic service board card (abbreviated as ingress service board card) 21: an ingress port of the ingress service board card 21, from which the traffic enters.

A cross-board egress port b of the ingress service board card 21: a cross-board egress port of the ingress service board card 21, connected, one to one, to the ingress port of the switching board card 22.

An ingress port c of the switching board card 22: an ingress port of the switching board card 22, connected, one to one, to the cross-board egress port of the ingress service board card 21. An egress port d of the switching board card 22: an egress port of the switching board card 22, connected, one to one, to a cross-board ingress port of the egress service board card 23.

An ingress port e of a traffic service board card (abbreviated as egress service board card) 23: an ingress port of the egress service board card 23, connected, one to one, to the egress port of the switching board card 22.

An egress port f of the egress service board card 23: an egress port of the egress service board card 23, from which the traffic exits.

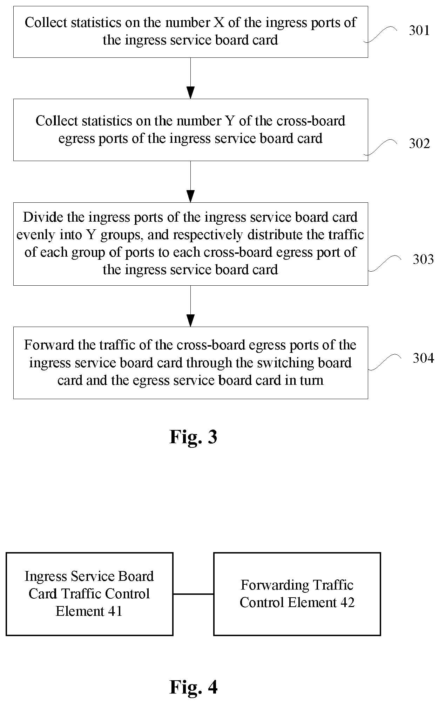

The cross-board forwarding process as shown in FIG. 2 is as shown in FIG. 3, which includes following operations of Step 301 to Step 304.

In Step 301, statistics are collected on the number X of the ingress ports of the ingress service board card.

In Step 302, statistics are collected on the number Y of the cross-board egress ports of the ingress service board card.

In Step 303, the ingress ports of the ingress service board card are evenly divided into Y groups, and the traffic of each group of ports is respectively distributed to each cross-board egress port of the ingress service board card.

In this step, the number of the ingress ports of the ingress service board card on the network device and the number of the cross-board egress ports generally meet: X>Y.

In the process of dividing into Y groups, following calculation is needed:

$$Z=X/Y;$$

that is, the number of the ingress ports included in each group is Z, the Z being an integer. The bandwidth of a single ingress port is inconsistent with that of a cross-board egress port. Furthermore, it is required that the Z multiplied by the bandwidth of a single ingress port is less than or equal to the bandwidth of a single cross-board egress port.

Therefore, after the Z is determined, following configuration is needed.

The traffic of ingress ports 1~Z of the ingress service board card is distributed to the first cross-board egress port of the ingress service board card, the traffic of the ingress ports (Z+1)~2*Z of the ingress service board card is distributed to the second cross-board egress port of the ingress service board card, and by analogy, the traffic of the ingress ports ((Y-1)*Z+1)~Y*Z of the ingress service board card is distributed to the Yth cross-board egress port of the ingress service board card.

When the Z is not an integer, other solutions other than the present invention may be adopted for implementation.

It is to be noted that the above group-dividing method is merely one of a plurality of methods, and the present invention is not limited thereto. What is needed is that the traffic of X ingress ports is equally distributed to Y cross-board egresses, that is, the ingress traffic of Z ingress ports needs to be forwarded from one cross-board egress port. No packet loss occurs during service board card forwarding because the bandwidth of a single ingress port multiplied by Z is less than or equal to the bandwidth of a single cross-board egress port.

In Step 304, the traffic of the cross-board egress ports of the ingress service board card is forwarded through the switching board card and the egress service board card in turn.

When cross-board forwarding in this step, after the traffic enters the switching board card, the ingress port of the switching board card is connected, one to one, to the cross-board egress port of the ingress service board card, and thus the number of the ports is equal, namely Y. The number of the ingress ports of the switching board card is equal to that of the egress ports of the switching board card, which is also Y. The switching board card needs to ensure that the ingress corresponds, one to one, to the egress in the process of traffic forwarding, that is, the traffic entering from an egress needs to exit from another egress. In this way, the switching board card may evenly forward the ingress traffic. It may be ensured that no packet loss occurs during traffic forwarding because the port bandwidth of the switching board card is equal.

After the traffic is forwarded from the egress port of the switching board card, the traffic enters the egress service board card, and the egress service board card forwards the traffic from the egress port of the egress service board card according to forwarding information of the traffic.

Embodiment 2

As shown in FIG. 4, this embodiment provides a cross-board forwarding apparatus, including: an ingress service board card traffic control element 41, configured to evenly distribute traffic of an ingress port of an ingress service board card to each of all cross-board egress ports of the ingress service board card; and a forwarding traffic control element 42, configured to forward the traffic of the cross-board egress ports of the ingress service board card through a switching board card and an egress service board card in turn.

Optionally, the forwarding traffic control element 42 at least is divided into a switching board card traffic control module and an egress service board card traffic control module. The switching board card traffic control module is configured to respectively transmit the traffic of each cross-board egress port of the ingress service board card to each ingress port of the switching board card, and respectively forward the traffic of each ingress port of the switching board card to the egress service board card by means of the corresponding egress port of the switching board card, wherein the ingress port of the switching board card corresponds, one to one, to the egress port of the switching board card. At this moment, the egress service board card traffic control module forwards, according to forwarding information of the traffic, the traffic forwarded by the switching board card.

Furthermore, the ingress service board card traffic control element 41 may also be divided into a dividing module and a traffic control module.

The dividing module is mainly configured to collect statistics on the number X of the ingress ports of the ingress service board card and the number Y of the cross-board egress ports of the ingress service board card, and evenly divide the X ingress ports of the service board card into Y groups according to the X and the Y.

The traffic control module is configured to respectively distribute the traffic of each group of ingress ports divided to each cross-board egress port of the ingress service board card.

When the dividing module divides, it is determined that the number of ports included in each group is Z when the X ingress ports are evenly divided into Y groups, and every Z ports among the X ports are divided into one group. Z=X/Y, and the Z is an integer. It is to be noted that when in actual dividing, every Z adjacent ports are divided into one group according to a port sequence number, for example, the ingress ports whose sequence numbers are from 1 to Z-1 are divided into the first group, the ingress ports whose sequence numbers are from Z to 2*Z-1 are divided into the second group, and by analogy, the ingress ports whose sequence numbers are from ((Y-1)*Z+1) to Y*Z are divided into the Yth group. Also, the Z designated ports may be divided into the first group according to a configuration directive. For example, the Z designated ingress ports whose sequence numbers are 1, 3, 4, 5, 7, 8 and so on are divided into the first group, then Z designated ingress ports from the remaining ingress ports are divided into the second group, and by analogy, the last Z ingress ports are divided into the Yth group. That is, the X ports are evenly divided into Y groups.

The apparatus provided by this embodiment can implement the method in the above embodiment 1. Therefore, other detailed introduction of the apparatus may refer to the corresponding content in embodiment 1, which is not repeated any more herein.

Those of ordinary skill in the art may understand that the steps of the above embodiment may be implemented, in whole or in part, using computer programs, which may be stored a computer readable storage medium. The computer programs may be executed on a corresponding hardware platform (such as a system, equipment, an apparatus, and a device), and one of the steps in the method embodiments or a combination thereof may be included when the computer programs are executed.

Optionally, the steps of the above embodiment also may be implemented, in whole or in part, using integrated circuits, and these steps may be respectively made into integrated circuit modules, or a plurality of modules thereamong or steps may be implemented by making into a single integrated circuit module.

The apparatus/functional modules/functional elements in the above embodiment may be implemented using general-purpose computing devices, either integrated into a single computing device or distributed on a network composed of a plurality of computing devices. When the apparatus/functional modules/functional elements in the above embodiment are implemented in the form of software functional modules and are sold or used as independent products, they can be stored in a computer-readable storage medium. The aforementioned computer-readable storage medium may be a read-only memory, a magnetic disk or optical disk, etc.

**Claims**

1. A cross-board forwarding method, comprising:

   distributing (101) traffic of an ingress port of an ingress service board card evenly to all cross-board egress ports of the ingress service board card; and
   forwarding (102) traffic of the cross-board egress ports of the ingress service board card through a switching board card and an egress service board card in turn,
   **characterized in that**, the distributing (101) traffic of an ingress port of an ingress service board card to all cross-board egress ports of the ingress service board card comprises:

   collecting (301, 302) statistics on a number X of the ingress ports of the ingress service board card and a number Y of the cross-board egress ports of the ingress service board card, and dividing (303) the X ingress ports evenly into Y groups; and
   distributing (303) traffic of each group of ingress ports as divided to each cross-board egress port of the ingress service board card, respectively.

2. The method according to claim 1, wherein the forwarding the traffic of the cross-board egress ports of the ingress service board card through a switching board card and an egress service board card in turn comprises:

   transmitting the traffic of each cross-board egress port of the ingress service board card to each ingress port of the switching board card, respectively;
   forwarding the traffic of each ingress port of the switching board card to the egress service board card through a corresponding egress port of the switching board card, respectively; and
   forwarding, by the egress service board card, the traffic forwarded by the switching board card according to forwarding information of the traffic;
   wherein the ingress port of the switching board card corresponds, one to one, to the egress port of the switching board card.

3. The method according to claim 1 or 2, wherein the dividing the X ingress ports evenly into Y groups comprises:

determining a number Z of ports included in each group when dividing the X ingress ports evenly into Y groups, wherein Z=X/Y, and Z is an integer; and
dividing every Z ports in the X ports into one group.

4. The method according to claim 3, wherein the dividing every Z ports in the X ports into one group comprises:

dividing every Z adjacent ports into one group according to a port sequence number; or
dividing Z designated ports into one group according to a configuration instruction.

5. A cross-board forwarding apparatus, comprising:

an ingress service board card traffic control element (41), configured to distribute traffic of an ingress port of an ingress service board card evenly to all cross-board egress ports of the ingress service board card; and
a forwarding traffic control element (42), configured to forward the traffic of the cross-board egress ports of the ingress service board card through a switching board card and an egress service board card in turn,
**characterized in that** the ingress service board card traffic control element (41) comprises:

a dividing module, configured to collect statistics on a number X of the ingress ports of the ingress service board card and a number Y of the cross-board egress ports of the ingress service board card, and divide the X ingress ports evenly into Y groups; and
a traffic control module, configured to distribute traffic of each group of ingress ports as divided respectively to each cross-board egress port of the ingress service board card.

6. The apparatus according to claim 5, wherein the forwarding traffic control element (42) comprises:

a switching board card traffic control module, configured to transmit the traffic of each cross-board egress port of the ingress service board card to each ingress port of the switching board card, respectively, and forward the traffic of each ingress port of the switching board card to the egress service board card via a corresponding egress port of the switching board card, respectively, wherein the ingress port of the switching board card corresponds, one to one, to the egress port of the switching board card; and
an egress service board card traffic control module, configured to forward the traffic forwarded by the switching board card according to forwarding information of the traffic.

7. The apparatus according to claim 5, wherein the dividing module is configured to:
determine a number Z of ports included in each group when dividing the X ingress ports evenly into Y groups, wherein Z=X/Y, and Z is an integer.

8. The apparatus according to claim 7, wherein the dividing module is configured to:

divide every Z adjacent ports into one group according to a port sequence number; or
divide Z designated ports into one group according to a configuration instruction.

9. A computer readable storage medium, storing computer-executable instructions, wherein the computer-executable instructions are executed to implement the method according to any one of claims 1-4.

**Patentansprüche**

1. Verfahren zur plattenübergreifenden Weiterleitung, umfassend:

Verteilen (101) von Verkehr auf einen Eintrittsanschluss einer Eingangsserviceplattenkarte gleichmäßig auf alle plattenübergreifenden Austrittsanschlüsse der Eingangsserviceplattenkarte; und
Weiterleiten (102) von Verkehr der plattenübergreifenden Austrittsanschlüsse der Eingangsserviceplattenkarte wechselweise über eine Schaltplattenkarte und eine Austrittsservicekartenplatte,
**dadurch gekennzeichnet, dass** das Verteilen (101) von Verkehr eines Eintrittsanschlusses einer Eingangsserviceplattenkarte auf alle plattenübergreifenden Austrittsanschlüsse der Eingangsserviceplattenkarte umfasst:

Erfassen ((301, 302) von Statistiken über eine Anzahl X der Eintrittsanschlüsse der Eingangsserviceplattenkarte und eine Anzahl Y der plattenübergreifenden Austrittsanschlüsse der Eingangsserviceplattenkarte, und gleichmäßiges Aufteilen (303) der X Eintrittsanschlüsse in Y Gruppen; und
Verteilen (303) von Verkehr einer jeden Gruppe von Eintrittsanschlüssen, wie sie aufgeteilt sind, an jeden jeweiligen plattenübergreifenden Austrittsanschluss der Eingangsserviceplattenkarte.

2. Verfahren nach Anspruch 1, wobei das Weiterleiten des Verkehrs von den plattenübergreifenden Austrittsanschlüssen der Eingangsserviceplattenkarte wechselweise über eine Schaltplattenkarte und eine Austrittsservicekartenplatte umfasst:

Übertragen des Verkehrs eines jeden plattenübergreifenden Austrittsanschlusses der Eingangsserviceplattenkarte an jeden jeweiligen Eintrittsanschluss der Schaltplattenkarte; Weiterleiten des Verkehrs eines jeden Eintrittsanschlusses der Schaltplattenkarte an die Austrittsservicekartenplatte über einen entsprechenden jeweiligen Austrittsanschluss der Schaltplattenkarte; und Weiterleiten über die Austrittsservicekartenplatte des von der Schaltplattenkarte weitergeleiteten Verkehrs gemäß Weiterleitungsinformationen des Verkehrs; wobei der Eintrittsanschluss der Schaltplattenkarte eins zu eins dem Austrittsanschluss der Schaltplattenkarte entspricht.

3. Verfahren nach Anspruch 1 oder 2, wobei das gleichmäßige Aufteilen der X Eintrittsanschlüsse in Y Gruppen umfasst:

Bestimmen einer Anzahl Z von beim gleichmäßigen Aufteilen der X Eintrittsanschlüsse in Y Gruppen in jeder Gruppe enthaltenen Anschlüsse, wobei $Z = X/Y$ und Z eine ganze Zahl ist; und Aufteilen jedes der Z Anschlüsse in den X Anschlüssen in eine Gruppe.

4. Verfahren nach Anspruch 3, wobei das Aufteilen jedes der Z Anschlüsse in den X Anschlüssen in eine Gruppe umfasst:

Aufteilen von jedem der Z angrenzenden Anschlüsse in eine Gruppe gemäß einer Anschlusssequenzanzahl; oder Aufteilen von Z bezeichneten Anschlüssen in eine Gruppe gemäß einer Konfigurationsanweisung.

5. Vorrichtung zum plattenübergreifenden Weiterleiten, umfassend:

ein Element zum Steuern von Verkehr einer Eingangsserviceplattenkarte (41), das konfiguriert ist, um Verkehr eines Eintrittsanschlusses einer Eingangsserviceplattenkarte gleichmäßig auf alle plattenübergreifenden Austrittsanschlüsse der Eingangsserviceplattenkarte zu verteilen;

und ein Element zum Steuern des Weiterleitens von Verkehr (42), das konfiguriert ist, um den Verkehr der plattenübergreifenden Austrittsanschlüsse der Eingangsserviceplattenkarte wechselweise über eine Schaltplattenkarte und eine Austrittsservicekartenplatte weiterzuleiten, **dadurch gekennzeichnet, dass** das Element zum Steuern von Verkehr einer Eingangsserviceplattenkarte (41) umfasst:

ein Aufteilmodul, das konfiguriert ist, um Statistiken über eine Anzahl X der Eintrittsanschlüsse der Eingangsserviceplattenkarte und eine Anzahl Y der plattenübergreifenden Austrittsanschlüsse der Eingangsserviceplattenkarte zu erfassen, und um die X Eintrittsanschlüsse gleichmäßig in Y Gruppen aufzuteilen; und ein Modul zum Steuern von Verkehr, das konfiguriert ist, um Verkehr von jeder Gruppe von Eintrittsanschlüssen, wie sie aufgeteilt wurden, an jeden jeweiligen plattenübergreifenden Austrittsanschluss der Eingangsserviceplattenkarte zu verteilen.

6. Vorrichtung nach Anspruch 5, wobei das Element zum Steuern des Weiterleitens von Verkehr (42) umfasst:

ein Schaltplattenkartenmodul zum Steuern von Verkehr, das konfiguriert ist, um den Verkehr eines jeden plattenübergreifenden Austrittsanschlusses der Eingangsserviceplattenkarte an jeden jeweiligen Eintrittsanschluss der Schaltplattenkarte zu übertragen, und um den Verkehr eines jeden Eintrittsanschlusses der Schaltplattenkarte an die Austrittsservicekartenplatte über einen entsprechenden jeweiligen Austrittsanschluss der Schaltplattenkarte weiterzuleiten, wobei der Eintrittsanschluss der Schaltplattenkarte eins zu eins dem Austrittsanschluss der Schaltplattenkarte entspricht; und ein Eintrittsservicekartenplattenmodul zum Steuern von Verkehr, das konfiguriert ist, um den von der Schalterplatte weitergeleiteten Verkehr gemäß Weiterleitungsinformationen des Verkehrs weiterzuleiten.

7. Vorrichtung nach Anspruch 5, wobei das Aufteilmodul konfiguriert ist, um: eine Anzahl Z von Anschlüssen zu bestimmen, die in jeder Gruppe enthalten sind, wenn die X Eintrittsanschlüsse gleichmäßig in Y Gruppen aufgeteilt werden, wobei $Z = X/Y$ und Z eine ganze Zahl ist.

8. Vorrichtung nach Anspruch 7, wobei das Aufteilmodul konfiguriert ist, um:

jeden der Z angrenzenden Anschlüsse in eine Gruppe gemäß einer Anschlusssequenzanzahl aufzuteilen; oder

Z bezeichnete Anschlüsse in eine Gruppe gemäß einer Konfigurationsanweisung aufzuteilen.

9. Computerlesbares Speichermedium, das von einem Computer ausführbare Anweisungen speichert, wobei die von einem Computer ausführbaren Anweisungen ausgeführt werden, um das Verfahren nach einem der Ansprüche 1 - 4 zu implementieren.

**Revendications**

1. Procédé d'acheminement inter-tableaux, comprenant les étapes consistant à :

distribuer (101) un trafic à partir d'un port d'entrée d'une carte de tableau de service d'entrée de manière uniforme à tous les ports de sortie inter-tableaux de la carte de tableau de service d'entrée ; et

acheminer (102) un trafic des ports de sortie inter-tableaux de la carte de tableau de service d'entrée à travers une carte de tableau de commutation et d'une carte de tableau de service de sortie, à tour de rôle,

**caractérisé en ce que** la distribution (101) d'un trafic d'un port d'entrée d'une carte de tableau de service d'entrée vers tous les ports de sortie inter-tableaux de la carte de tableau de service d'entrée comprend les étapes consistant à :

collecter (301, 302) des statistiques sur un nombre X des ports d'entrée de la carte de tableau de service d'entrée et un nombre Y des ports de sortie inter-tableaux de la carte de tableau de service d'entrée, et diviser (303) les X ports d'entrée de manière uniforme en Y groupes ; et

distribuer (303) un trafic de chaque groupe de ports d'entrée sous une forme divisée vers chaque port de sortie inter-tableaux de la carte de tableau de service d'entrée, respectivement.

2. Procédé selon la revendication 1, dans lequel l'acheminement du trafic des ports de sortie inter-tableaux de la carte de tableau de service d'entrée à travers une carte de tableau de commutation et une carte de tableau de service de sortie à tour de rôle comprend les étapes consistant à :

transmettre le trafic de chaque port de sortie inter-tableaux de la carte de tableau de service d'entrée à chaque port d'entrée de la carte de tableau de commutation, respectivement ;

acheminer le trafic de chaque port d'entrée de la carte de tableau de commutation à la carte de tableau de service de sortie à travers un port de sortie correspondant de la carte de tableau de commutation, respectivement ; et

acheminer, par l'intermédiaire de la carte de tableau de service de sortie, le trafic acheminé par la carte de tableau de commutation conformément aux informations d'acheminement du trafic ;

dans lequel le port d'entrée de la carte de tableau de commutation correspond, un à un, au port de sortie de la carte de tableau de commutation.

3. Procédé selon la revendication 1 ou 2, dans lequel la division des X ports d'entrée de manière uniforme en Y groupes comprend les étapes consistant à :

déterminer un nombre Z de ports inclus dans chaque groupe lors de la division des X ports d'entrée de manière uniforme en Y groupes, dans lequel Z = X/Y, et Z est un entier ; et diviser chacun des Z ports dans les X ports en un groupe.

4. Procédé selon la revendication 3, dans lequel la division de chacun des Z ports dans les X ports en un groupe comprend les étapes consistant à :

diviser chacun de Z ports adjacents en un groupe en fonction d'un numéro de séquence de ports ; ou

diviser Z ports désignés en un groupe selon une instruction de configuration.

5. Appareil d'acheminement inter-tableaux, comprenant :

un élément commande de trafic de carte de tableau de service d'entrée (41), configuré pour distribuer le trafic d'un port d'entrée d'une carte de tableau de service d'entrée de manière uniforme sur tous les ports de sortie inter-tableaux de la carte de tableau de service d'entrée ; et

un élément de commande de trafic d'acheminement (42), configuré pour acheminer le trafic des ports de sortie inter-tableaux de la carte de tableau de service d'entrée à travers une carte de tableau de commutation et une carte de tableau de service de sortie, à tour de rôle,

**caractérisé en ce que** l'élément de commande de trafic de carte de tableau de service d'entrée (41) comprend :

un module de division, configuré pour collecter des statistiques sur un nombre X des ports d'entrée de la carte de tableau de service d'entrée et sur un nombre Y de ports de sortie inter-tableaux de la carte de tableau de service d'entrée, et pour diviser les ports d'entrée X de manière uniforme en Y groupes ; et

un module de commande de trafic, configuré pour distribuer le trafic de chaque groupe de ports d'entrée sous la forme d'une division respective vers chaque port de sortie inter-tableaux de la carte de tableau de service d'entrée.

6. Appareil selon la revendication 5, dans lequel l'élément de commande de trafic de transmission (42) comprend :

un module de commande de trafic de carte de tableau de commutation, configuré pour transmettre le trafic de chaque port de sortie inter-tableaux de la carte de tableau de service d'entrée à chaque port d'entrée de la carte de tableau de commutation, respectivement, et acheminer le trafic de chaque port d'entrée de la carte de tableau de commutation vers la carte de tableau de service de sortie via un port de sortie correspondant de la carte de tableau de commutation, respectivement, dans lequel le port d'entrée de la carte de tableau de commutation correspond, un à un, au port de sortie de la carte de tableau de commutation ; et

un module de commande de trafic de carte de tableau de service de sortie, configuré pour acheminer le trafic acheminé par la carte de tableau de commutation conformément aux informations d'acheminement du trafic.

7. Appareil selon la revendication 5, dans lequel le module de division est configuré pour :
déterminer un nombre Z de ports inclus dans chaque groupe lors de la division des X ports d'entrée de manière uniforme en Y groupes, dans lequel Z = X/Y, et Z est un entier.

8. Appareil selon la revendication 7, dans lequel le module de division est configuré pour :

diviser chacun de Z ports adjacents en un groupe en fonction d'un numéro de séquence de ports ; ou
diviser Z ports désignés en un groupe conformément à une instruction de configuration.

9. Support de stockage lisible par ordinateur, stockant des instructions exécutables par ordinateur, dans lequel les instructions exécutables par ordinateur sont exécutées pour implémenter le procédé selon l'une quelconque des revendications 1-4.

Distributing traffic of the ingress port of an ingress service board card evenly to all cross-board egress ports of the ingress service board

101

Forwarding the traffic of the cross-board egress ports of the ingress service board card through a switching board card and an egress service board card in turn

102

**Fig. 1**

| Ingress Service Board Card 21 | b → c | Switching Board Card 22 | d → e | Egress Service Board Card 23 |

a ↑

f ↓

**Fig. 2**

Collect statistics on the number X of the ingress ports of the ingress service board card — 301

Collect statistics on the number Y of the cross-board egress ports of the ingress service board card — 302

Divide the ingress ports of the ingress service board card evenly into Y groups, and respectively distribute the traffic of each group of ports to each cross-board egress port of the ingress service board card — 303

Forward the traffic of the cross-board egress ports of the ingress service board card through the switching board card and the egress service board card in turn — 304

**Fig. 3**

| Ingress Service Board Card Traffic Control Element 41 | Forwarding Traffic Control Element 42 |

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014198656 A
- US 2013182581 A
- US 2011222394 A
- US 2006056412 A